(19) **Europäisches Patentamt**

**European Patent Office**

**Office européen des brevets**

(11) **EP 0 733 430 A1**

(12) **EUROPÄISCHE PATENTANMELDUNG**

(43) Veröffentlichungstag:
25.09.1996 Patentblatt 1996/39

(51) Int. Cl.<sup>6</sup>: **B23G 5/18**

(21) Anmeldenummer: 96103744.7

(22) Anmeldetag: 09.03.1996

(84) Benannte Vertragsstaaten:
**DE ES FR GB IT SE**

(30) Priorität: **21.03.1995 DE 19510166**

(71) Anmelder: **Joh. & Ernst Link GmbH & Co. KG**
**D-70565 Stuttgart (DE)**

(72) Erfinder: **Der Erfinder hat auf seine Nennung verzichtet.**

(74) Vertreter: **Jackisch-Kohl, Anna-Katharina**
**Patentanwälte**
**Jackisch-Kohl & Kohl**
**Stuttgarter Strasse 115**
**70469 Stuttgart (DE)**

(54) **Gewindefräser**

(57)     Der Gewindefräser dient zum Zirkularfräsen einer Gewindebohrung ohne Vorbohrung eines Kernloches und hat einen Schaft (1) und ein Arbeitsteil (2), der eine Stirnschneide (4) und Fräserzähne (5 bis 8) aufweist, mit denen die Gewindegänge herstellbar sind. Die Fräserzähne (5 bis 8) sind in rechtwinklig zur Fräserachse liegenden Umfangsebenen angeordnet, die in Achsrichtung des Gewindefräsers Abstand voneinander haben. Um mit dem Gewindefräser Gewinde herstellen zu können, deren Seitenflanken zumindest annähernd gleiche Oberflächenqualität aufweisen, ist der Abstand zweier der Umfangsebenen der Fräserzähne (5 bis 8) voneinander ungleich der Teilung des herzustellenden Gewindes. Dadurch können die Fräserzähne (5 bis 8) so ausgebildet werden, daß die Seitenflanken der Gewindegänge annähernd gleiche Oberflächenqualität haben.

Fig. 1

Fig. 5

## Beschreibung

Die Erfindung betrifft einen Gewindefräser nach dem Oberbegriff des Anspruches 1.

Bei diesem bekannten Gewindefräser (EP-PS 0 432 621) haben die Umfangsebenen, in denen die Fräserzähne angeordnet sind, einen der Teilung des herzustellenden Gewindes entsprechenden Abstand voneinander. Die Fräserzähne haben mit zunehmendem Abstand vom Stirnende des Arbeitsteiles einen zunehmenden Flanken- und Außendurchmesser. Dadurch wird das Zerspanungsvolumen bei der Herstellung des Gewindes auf die Fräserzähne in den verschiedenen Umfangsebenen verteilt. Zur Abfuhr der beim Fräsen entstehenden Späne ist der Arbeitsteil mit mehreren spiralförmig verlaufenden Spannuten versehen. Dadurch entsteht an der einen Flanke der Fräserzähne ein positiver und an der anderen Flanke ein negativer Seitenspanwinkel. Wenn die Fräserzähne die Gewindegänge herstellen, ist die Bearbeitungsqualität der Seitenflanken der Gewindegänge unterschiedlich, da die Fräserzähne im Bereich der Flanken mit dem positiven Seitenspanwinkel ein wesentlich saubereres Gewinde schneiden als im Bereich der Fräserzahnflanken mit negativem Seitenspanwinkel. Die Folge hiervon ist, daß die Seitenflanken der Gewindegänge unterschiedliche Oberflächenqualität haben.

Der Erfindung liegt die Aufgabe zugrunde, den gattungsgemäßen Gewindefräser so auszubilden, daß mit ihm Gewinde hergestellt werden können, deren Seitenflanken zumindest annähernd gleiche Oberflächenqualität aufweisen.

Diese Aufgabe wird beim gattungsgemäßen Gewindefräser erfindungsgemäß mit den kennzeichnenden Merkmalen des Anspruches 1 gelöst.

Beim erfindungsgemäßen Gewindefräser haben wenigstens zwei Umfangsebenen einen Abstand voneinander, der sich von der Teilung des herzustellenden Gewindes unterscheidet. Dadurch können die Fräserzähne so ausgebildet werden, daß die Seitenflanken der Gewindegänge annähernd gleiche Oberflächenqualität haben. Durch unterschiedliche Abstände der Umfangsebenen der Fräserzähne in Achsrichtung kann das größere zu zerspanende Werkstückvolumen wahlweise zum positiven oder negativen Seitenspanwinkel hin verschoben werden. Dadurch entstehen auch unterschiedlich dicke Späne, wodurch darüber hinaus ein günstiger Spanabfluß gewährleistet ist.

Weitere Merkmale der Erfindung ergeben sich aus den weiteren Ansprüchen, der Beschreibung und den Zeichnungen.

Die Erfindung wird anhand einiger in den Zeichnungen dargestellter Ausführungsformen näher erläutert. Es zeigen

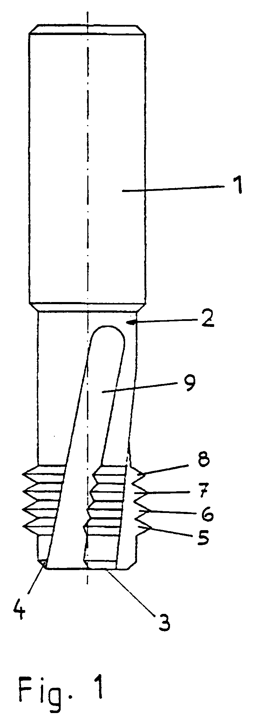

Fig. 1 in Ansicht einen erfindungsgemäßen Gewindefräser,

Fig. 2 in perspektivischer und vergrößerter Darstellung Fräserzähne eines spiralgenuteten Gewindefräsers,

Fig. 3 den Ausschnitt X gemäß Fig. 2 in vergrößerter Darstellung,

Fig. 4 bis Fig. 11 die Fräserzähne von verschiedenen Ausführungsformen von erfindungsgemäßen Gewindefräsern in Ansicht.

Der Gewindefräser hat einen Schaft 1, mit dem er in bekannter Weise in eine Spannvorrichtung einer Antriebsspindel eingespannt werden kann. An den Schaft 1 schließt ein Arbeitsteil 2 an, der an seiner Stirnseite 3 wenigstens eine Stirnschneide 4 aufweist. Mit axialem Abstand von der Stirnseite 3 ist der Arbeitsteil 2 mit axial mit Abstand hintereinander angeordneten Fräserzähnen 5 bis 8 versehen, die jeweils in Radialebenen des Arbeitsteiles 2 liegen. Zur Abfuhr der beim Gewindefräsvorgang anfallenden Späne ist der Arbeitsteil 2 mit mindestens einer Spannut 9 versehen, die sich von der Stirnseite 3 aus bis nahe an den Schaft 1 erstreckt und Steigung aufweist.

Mit dem Gewindefräser können Gewindebohrungen in einem Arbeitsdurchgang gefertigt werden. Der Gewindefräser wird um seine Achse rotierend angetrieben, axial in das Werkstück bewegt und gleichzeitig um die Achse der herzustellenden Gewindebohrung umlaufend bewegt. Dadurch wird gleichzeitig die Kernbohrung im Werkstück gebohrt und das Gewinde in der Wandung der Kernbohrung gefräst.

Mit der Stirnschneide 4 wird die Bohrung im Werkstück hergestellt, während unmittelbar anschließend in noch zu beschreibender Weise mit den Fräserzähnen 5 bis 8 das Gewinde gefräst wird. Nachdem die Bohrung hergestellt und gleichzeitig das Gewinde gefräst worden ist, wird der Gewindefräser aus der Gewindebohrung herausgezogen. Die beim Bohr- und Gewindefräsvorgang anfallenden Späne werden über die Spannut 9 nach außen abgeführt.

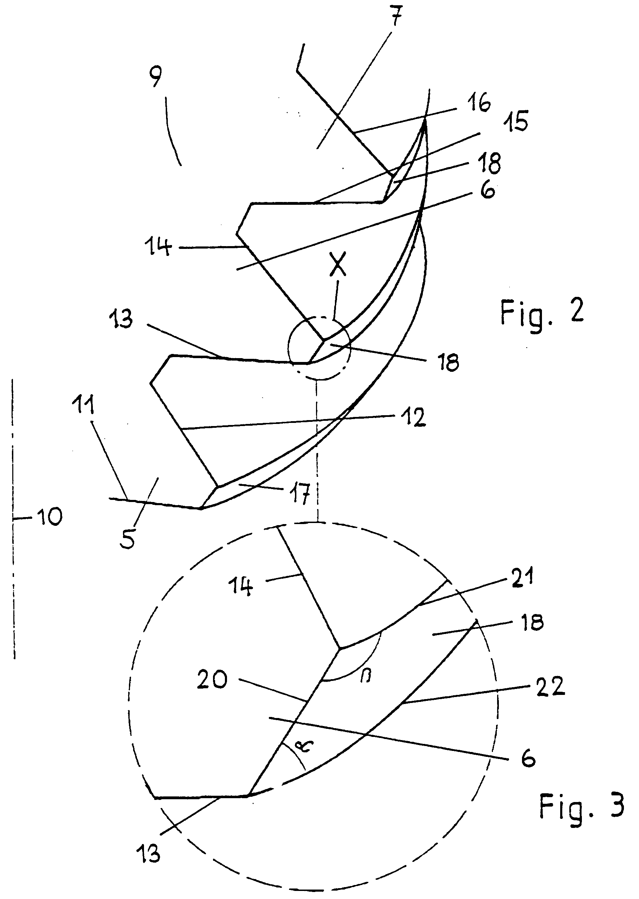

In Fig. 2 sind perspektivisch die an die Spannut 9 anschließenden Bereiche der Fräserzähne 5 bis 7 dargestellt. Die Achse des Gewindefräsers ist mit 10 bezeichnet. Die Fräserzähne 5 bis 7 haben Flanken (Schneiden) 11 bis 16, die spitzwinklig zueinander liegen und durch jeweils eine schmale Stirnfläche 17 bis 19 verbunden sind. Wie Fig. 3 beispielhaft für den Fräserzahn 6 zeigt, weist die Stirnfläche 18 an der Spannut 9 eine Kante 20 auf, die winklig zu Kanten 21 und 22 liegt. Diese Kanten 21, 22 werden zwischen der Stirnfläche 18 und der Flanke 13 bzw. der Flanke 14 gebildet. Die Kante 20 schließt mit der Kante 21 den Seitenspanwinkel $\beta$ und mit der Kante 22 den Seitenspanwinkel $\alpha$ ein. Da die Spannut 9 rechtsgedrallt ist, ist der Seitenspanwinkel $\beta$ größer als 90°, während der Seitenspanwinkel $\alpha$ kleiner als 90° ist.

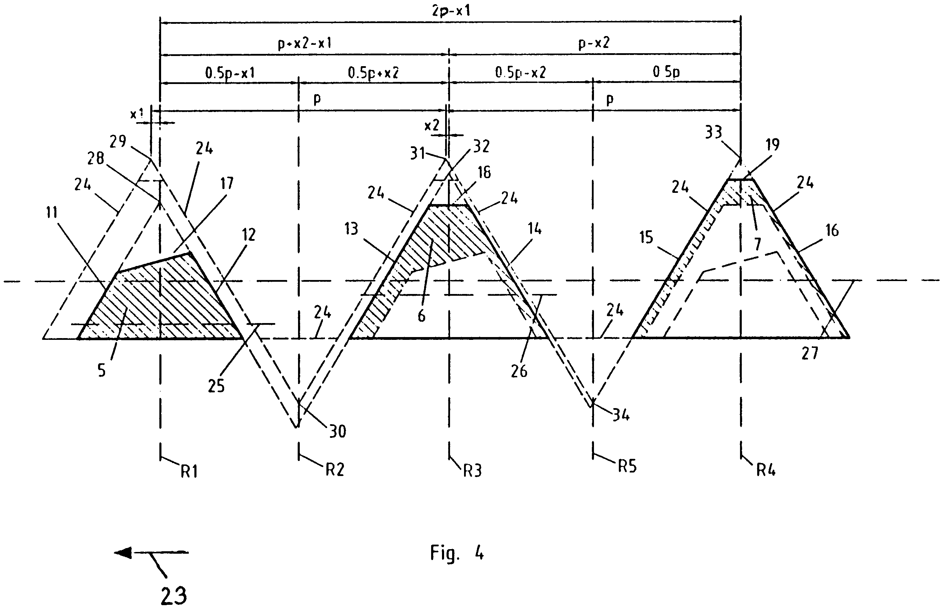

Der Gewindefräser zeichnet sich nun dadurch aus, daß die in Achsrichtung gemessenen Abstände der Fräserzähne 5 bis 8 ungleich der Teilung des herzustellenden Gewindes sind. Damit weicht dieser Gewindefräser grundlegend von der Ausgestaltung der herkömmlichen Gewindefräser ab, bei denen dieser Abstand stets der Gewindeteilung entspricht. Die im folgenden anhand der Fig. 4 bis 11 beschriebenen verschiedenen Ausführungsformen von Gewindefräsern zeichnen sich dadurch aus, daß zum einen der Abstand der Fräserzähne ungleich der Gewindeteilung ist und daß zum anderen die einzelnen Fräserzähne unterschiedliche Flankendurchmesser aufweisen.

In Fig. 4 sind die drei Fräserzähne 5 bis 7 dargestellt, mit denen ein Gewinde in einem Werkstück hergestellt werden soll. Die Fräserzähne 5 bis 7 sind so ausgebildet, daß der Flankendurchmesser sowie der Außendurchmesser entgegen Vorschubrichtung 23 des Gewindefräsers zunimmt. Dadurch wird die Zerspanungsarbeit bei der Herstellung des Gewindes auf diese Fräserzähne verteilt. Das im Werkstück herzustellende Gewinde ist in Fig. 4 durch die Linie 24 gekennzeichnet.

Mit dem Fräserzahn 5 wird zunächst der in Fig. 4 schraffiert gezeichnete Bereich im Werkstück abgetragen. Dieser Fräserzahn 5 hat die Flanken 11 und 12 sowie die ebene Stirnfläche 17, die im Axialschnitt winklig zur Gewindefräserachse liegt.

Der nachfolgende Zahn 6 hat die beiden Flanken 13 und 14, die durch die ebene Stirnfläche 18 miteinander verbunden sind. Der Fräserzahn 7 hat die Flanken 15 und 16 sowie die ebene Stirnfläche 19. Der Außendurchmesser der Zähne 5 bis 7 nimmt entgegen Vorschubrichtung 23 zu. Außerdem steigt auch der Flankendurchmesser der Fräserzähne 5 bis 7 entgegen Vorschubrichtung 23 an. Der Fräserzahn 5 hat den Flankendurchmesser 25, der Fräserzahn 6 den Flankendurchmesser 26 und der Fräserzahn 7 den Flankendurchmesser 27.

In Fig. 4 ist die Teilung p des herzustellenden Gewindes 24 angegeben. Der in Vorschubrichtung 23 erste Fräserzahn 5 ist in bezug auf das herzustellende Gewinde 24 axial versetzt angeordnet. Die Flanke 11 dieses Zahnes 5 hat größeren Abstand von der in Fig. 4 linken Flanke des herzustellenden Gewindes 24 als die Flanke 12 des Fräserzahnes 5. Bezogen auf die Radialebene $R_1$ des Fräserzahnes 5 liegt die durch die Verlängerung der Flanken 11 und 12 gebildete Spitze 28 in einem Abstand $x_1$ von der Spitze 29 des herzustellenden Gewindes 24.

Die Radialebene $R_2$ liegt in halber Breite zwischen den Spitzen 29 und 31 benachbarter Gewindegänge. Die gedachte Spitze 28 des Fräserzahns 5, die in der Radialebene $R_1$ liegt, hat somit von der gedachten Spitze 30 des Gewindes 24 den Abstand $0,5\,p - x_1$. Außerdem ist der axiale Abstand zwischen der Radialebene $R_2$ und der Radialebene $R_3$ $0,5\,p + x_2$. Die Radialebene $R_3$ geht durch die gedachte Spitze 32, die von gedachten Verlängerungen der Flanken 13 und 14 des Fräserzahnes 6 gebildet wird. Der Abstand $0,5\,p - x_1$ ist kleiner als die halbe Teilung p, während der Abstand $0,5\,p + x_2$ größer als die halbe Teilung p ist. Der axiale Abstand der gedachten Spitzen 28 und 32 der Fräserzähne 5 und 6 beträgt somit $p + x_2 - x_1$, ist also ungleich der Teilung p des herzustellenden Gewindes.

Zwischen den durch die gedachten Verlängerungen der Seitenflanken des herzustellenden Gewindes gebildeten Spitzen 31 und 33 benachbarter Gewindegänge besteht wiederum ein der Teilung p des Gewindes entsprechender Abstand. Die gedachten Verlängerungen der Flanken 15 und 16 des Fräserzahns 7 schneiden einander ebenfalls im Punkt 33. Er liegt auf der Radialebene $R_4$ des Gewindefräsers. Der Abstand der Radialebene $R_5$ und der durch die dem Fräserzahn 6 zugeordnete Spitze 32 gehende Radialebene $R_3$ beträgt $0,5\,p - x_2$. Andererseits beträgt der Abstand der Radialebene $R_5$ von der durch die gedachte Spitze 33 gehenden Radialebene $R_4$ $0,5\,p$. Auch in diesem Falle ist der Axialabstand, den die Fräserzähne 6 und 7 voneinander haben, ungleich der Teilung p des Gewindes. Dieser Abstand beträgt $p - x_2$. Somit beträgt der Abstand zwischen den Radialebenen $R_1$ und $R_4$, die jeweils durch die gedachten Spitzen 28 und 33 der Fräserzähne 5 und 7 gehen, $2\,p - x_1$.

Die Fräserzähne 5 bis 7 nehmen aufgrund der beschriebenen Anordnung und Ausbildung an den beiden Flanken jeweils unterschiedliche Spandicken vom Werkstück ab. Für den Fräserzahn 5 ist mit schraffierten Linien derjenige Werkstückbereich gekennzeichnet, der vom Fräserzahn 5 bei der Bearbeitung entfernt wird. Es ist erkennbar, daß aufgrund des beschriebenen Versatzes dieses Fräserzahnes 5 in bezug auf die Endform des herzustellenden Gewindes im Bereich der Flanke 12 des Fräserzahnes 5 mehr Material abgenommen wird als im Bereich der Flanke 11. Der nachfolgende Fräserzahn 6 nimmt den mit schraffierten Linien gekennzeichneten Bereich des Werkstückes spanabhebend weg. Im Bereich der Flanke 13 dieses Fräserzahnes 6 wird mehr Werkstückmaterial abgenommen als im Bereich der Flanke 14. Allerdings ist im Bereich der Flanke 14 nahezu die Endform des Gewindes 24 erreicht. Darum muß der nachfolgende Fräserzahn 7 im Bereich seiner Flanke 16 nur noch wenig Material abnehmen, um die Endform des Gewindes 24 herzustellen. Der vom Fräserzahn 7 abzutragende Werkstückbereich ist wiederum durch Schraffur gekennzeichnet. Im Bereich der Flanke 15 nimmt der Fräserzahn 7 mehr Werkstückmaterial ab als im Bereich der gegenüberliegenden Flanke 16.

Die Zerspanungsarbeit bei der Herstellung des Gewindes 24 wird auf die Fräserzähne 5 bis 7 verteilt, so daß die Zähne nur einem geringen Verschleiß unterliegen.

Infolge des Rechtsdralls der Spannut 9 entsteht an den Flanken 11, 13 und 15, wie anhand der Fig. 2 und 3 erläutert worden ist, ein positiver Seitenspanwinkel $\beta$, während an den Flanken 12, 14 und 16 der negative Seitenspanwinkel $\alpha$ gebildet wird. Durch die unterschiedlichen Axialabstände der Fräserzähne 5 bis 7 wird das größere zu zerspanende Werkstückvolumen wahlweise zum positiven oder negativen Seitenspanwinkel hin verschoben. Dadurch wird erreicht, daß beide Flanken der Gewindegänge eine annähernd gleich gute Oberflächenqualität erhalten. Außerdem gewährleistet eine unterschiedliche Spandicke an den beiden Flanken jedes Fräserzahnes einen günstigen Spanabfluß.

Die Fräserzähne 5 bis 7 haben jeweils eine im Axialschnitt ebene Stirnfläche 17 bis 19, deren Radialabstand von der Achse des Gewindefräsers vom Fräserzahn 5 zum Fräserzahn 7 zunimmt.

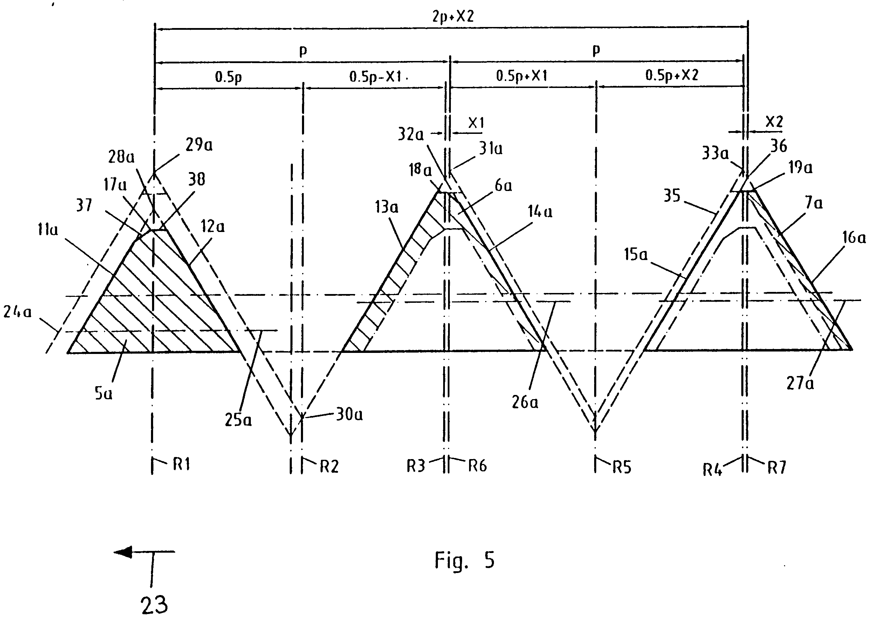

Fig. 5 zeigt einen Gewindefräser mit den Fräserzähnen 5a bis 7a, welche die Flanken 11a, 12a; 13a, 14a und 15a, 16a aufweisen. Die gedachten Verlängerungen der Flanken 11a, 12a schneiden einander im Punkt 28a, der im Gegensatz zum vorigen Ausführungsbeispiel auf der gleichen Radialebene $R_1$ liegt wie die gedachte Spitze 29a des herzustellenden Gewindes 24a. Die beiden Flanken 11a, 12a des Fräserzahns 5a haben somit gleichen Abstand von den beiden Seitenflanken des dem Fräserzahn 5a zugeordneten Gewindegangs. Der Fräserzahn 5a trägt darum, wie Fig. 5 zeigt, an beiden Flanken 11a, 12a annähernd gleich viel Material vom Werkstück ab.

Die gedachten Spitzen 29a, 31a benachbarter Gewindegänge haben wiederum den Abstand p, der Teilung des herzustellenden Gewindes. Der Fräserzahn 6a ist in Richtung auf den Fräserzahn 5a axial versetzt angeordnet. Die Flanke 13a des Fräserzahnes 6a schneidet die entsprechende Seitenflanke des Gewindes 24a fertig. Die gegenüberliegende Flanke 14a des Fräserzahnes 6a hat noch Abstand von der entsprechenden Seitenflanke des herzustellenden Gewindes 24a. Die vom Fräserzahn 6a abzutragenden Bereiche sind wiederum schraffiert gekennzeichnet.

Der Fräserzahn 7a trägt dann nur noch im Bereich der Flanke 16a das Material so weit ab, daß auch die andere Seitenflanke des Gewindes 24a hergestellt wird. Die andere Flanke 15a des Fräserzahns 7a hat Abstand von der durch die Flanke 13a des Fräserzahns 6a fertig bearbeiteten Seitenflanke 35 des Gewindes 24a.

Die gedachten Verlängerungen der Seitenflanken benachbarter Gewindegänge schneiden einander im Punkt 30a, der auf der Radialebene $R_2$ liegt. Von dieser Radialebene $R_2$ hat die Radialebene $R_1$, auf der der gedachte Schnittpunkt 28a liegt, den Abstand 0,5 p. Aufgrund des beschriebenen axialen Versatzes des Fräserzahnes 6a in Richtung auf den Fräserzahn 5a ist der Abstand des Schnittpunktes 32a, der durch die gedachten Verlängerungen der Flanken 13a und 14a des Fräserzahns 6a gebildet wird, von der Radialebene $R_2$ kleiner als die halbe Teilung. Dieser Schnittpunkt 32a liegt auf der Radialebene $R_3$, die von der durch die gedachte Spitze 31a des Gewindeganges gehenden Radialebene $R_6$ den Abstand $x_1$ hat. Damit beträgt der axiale Abstand zwischen den Radialebenen $R_2$ und $R_3$ 0,5 p - $x_1$.

Der durch die gedachten Verlängerungen der Flanken 15a und 16a des Fräserzahnes 7a gebildete Schnittpunkt 36 liegt in einer Radialebene $R_7$, die im Abstand $x_2$ von der Radialebene $R_4$ liegt, in der der gedachte Schnittpunkt 33a des Gewindeganges liegt. In halber axialer Breite zwischen den Radialebenen $R_6$ und $R_4$ liegt die Radialebene $R_5$, von der die Radialebene $R_3$ den Abstand 0,5 p + $x_1$ hat. Die Radialebene $R_7$, auf welcher der gedachte Flankenschnittpunkt 36 des Fräserzahnes 7a liegt, hat von der Radialebene $R_4$ den Abstand $x_2$ und somit von der Radialebene $R_5$ den Abstand 0,5 p + $x_2$.

Aufgrund der beschriebenen Ausbildung und Anordnung haben die Radialebenen $R_1$ und $R_7$ den axialen Abstand 2 p + $x_2$. Dieser Abstand ist somit größer als die doppelte Teilung p des Gewindes 24a. Der Flankendurchmesser 25a des Fräserzahns 5a ist kleiner als der Flankendurchmesser 26a des Fräserzahns 6a. Der Fräserzahn 7a schließlich hat gleichen Flankendurchmesser 27a wie der Fräserzahn 6a.

Die Stirnfläche 17a des Fräserzahns 5a ist im Axialschnitt gewinkelt ausgebildet und hat zwei stumpfwinklig aneinanderstoßende Abschnitte 37 und 38, von denen der Abschnitt 37 stumpfwinklig in die Flanke 11a und der Abschnitt 38 stumpfwinklig in die Flanke 12a übergeht. Der Flächenabschnitt 38 verläuft im Axialschnitt parallel zur Drehachse des Gewindefräsers.

Die Stirnflächen 18a und 19a der beiden Fräserzähne 6a und 7a verlaufen im Axialschnitt entsprechend der vorigen Ausführungsform parallel zur Drehachse des Gewindefräsers. Der Außendurchmesser des Fräserzahnes 5a ist kleiner als der Außendurchmesser der Fräserzähne 6a und 7a, die jeweils gleichen Außendurchmesser haben.

Auch bei dieser Ausführungsform entspricht der axiale Abstand der Fräserzähne 5a bis 7a voneinander nicht der Teilung p des herzustellenden Gewindes. Zwischen den Zähnen 5a und 6a ist dieser Abstand kleiner als die Teilung p, während dieser axiale Abstand zwischen den Zähnen 6a und 7a größer als die Teilung ist. Im Unterschied zur vorigen Ausführungsform werden die beiden Seitenflanken des Gewindes 24a nicht gleichzeitig durch den Fräserzahn 7a, sondern versetzt durch die beiden Fräserzähne 6a und 7a hergestellt.

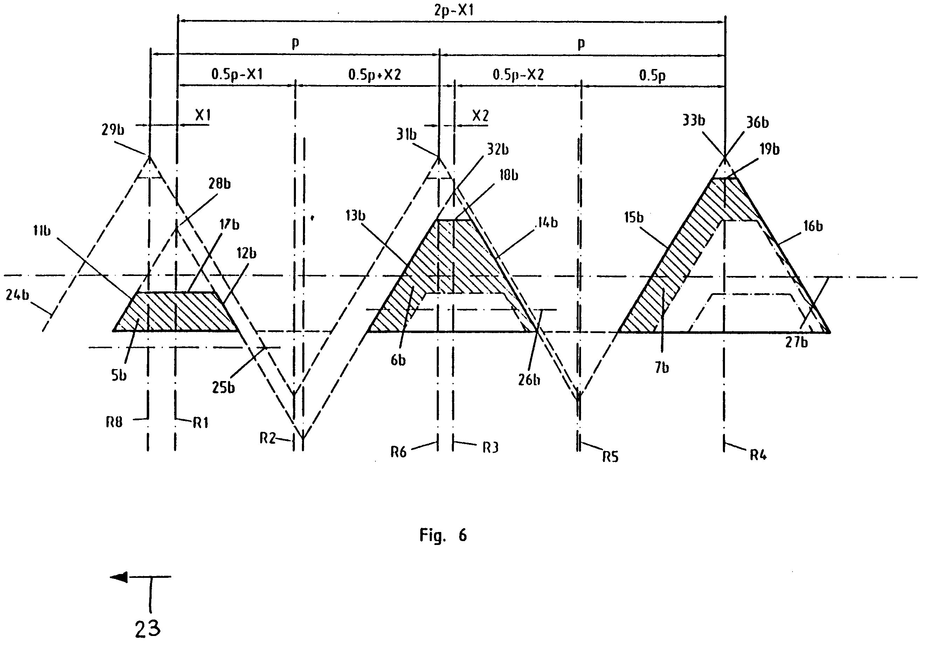

Fig. 6 zeigt eine Ausführungsform, bei der sich der axiale Abstand der Fräserzähne deutlich vom Teilungsmaß des herzustellenden Gewindes unterscheidet. Außerdem sind die Fräserzähne derart versetzt zueinander angeordnet, daß an den beiden Flanken jedes Fräserzahnes stark ungleiche Spandicken abgenommen werden. Dies ist insbesondere beim letzten Fräserzahn 7b der Fall, mit dem das Endprofil des Gewindes 24b hergestellt wird. Die Abstände zwischen den gedachten Spitzen 29b, 31b und 33b des Gewindes 24b entsprechen der Teilung p des Gewindes. Die Fräserzähne 5b bis 7b haben axiale Abstände voneinander, die sich erheblich von der Teilung p unterscheiden. Die Fräserzähne 5b bis 7b haben zunehmenden Flanken- und Außendurchmesser. Der Fräserzahn 5b hat die beiden spitzwinklig zueinander liegenden Flanken 11b und 12b, die durch die im Axialschnitt ebene Stirnfläche 17b miteinander verbunden sind. Der Fräserzahn 6b hat die spitzwinklig zueinander liegenden Flanken 13b und 14b, die durch die im Axialschnitt ebene Stirnfläche 18b miteinander verbunden sind. Der Fräserzahn 7b schließlich hat die im Axialschnitt ebene Stirnfläche 19b, welche die beiden spitzwinklig zueinander liegenden Flanken 15b und 16b miteinander verbindet. Die Stirnflächen 17b bis 19b haben unterschiedliche axiale Breite. Die Stirnfläche 17b hat größere axiale Breite als die Stirnfläche 18b, die ihrerseits größere axiale Breite hat als die Stirnfläche 19b. In Fig. 6 sind die von den Fräserzähnen 5b bis 7b zerspanten Bereiche jeweils durch eine Schraffur gekennzeichnet. Das Zerspanungsvolumen bei der Herstellung des Gewindes 24b wird wiederum auf die Fräserzähne 5b bis 7b verteilt.

Der Fräserzahn 5b ist in Richtung auf den Fräserzahn 6b versetzt angeordnet. Dadurch hat der in der Radialebene $R_1$ liegende gedachte Schnittpunkt 28b der Flanken 11b, 12b den axialen Abstand $x_1$ von der Radialebene $R_8$ des Gewindes, in der die gedachte Spitze 29b des Gewindes 24b liegt.

Der Fräserzahn 6b ist in Richtung auf den Fräserzahn 7b axial versetzt angeordnet. Der gedachte Schnittpunkt 32b der Flanken 13b, 14b des Fräserzahns 6b liegt in der Radialebene $R_3$, die den axialen Abstand $x_2$ von der Radialebene $R_6$ hat, in welcher der gedachte Schnittpunkt 31b des Gewindes 24b liegt. Der axiale Abstand $x_2$ ist kleiner als der axiale Abstand $x_1$.

Der gedachte radiale Schnittpunkt 36b der Flanken 15b, 16b des Fräserzahnes 7b fällt mit dem gedachten Schnittpunkt 33b des Gewindes 24b zusammen und liegt auf der Radialebene $R_4$ des Gewindefräsers.

Wie Fig. 6 zeigt, entspricht der axiale Abstand der Radialebene $R_1$ von der Radialebene $R_2$, die in halber axialer Breite benachbarter Gewindegänge verläuft, dem Maß $0{,}5\,p - x_1$. Die Radialebene $R_3$ hat von der Radialebene $R_2$ den Abstand $0{,}5\,p + x_2$, ist also größer als die halbe Gewindeteilung. Der Abstand der Radialebene $R_3$ von der in halber Breite der Gewindeteilung p liegenden Radialebene $R_5$ beträgt $0{,}5\,p - x_2$. Die Radialebene $R_4$ hat von der Radialebene $R_5$ den Abstand $0{,}5\,p$. Aufgrund der beschriebenen Anordnung und Ausbildung der Fräserzähne 5b bis 7b beträgt somit der Abstand zwischen den Radialebenen $R_1$ und $R_4$ $2\,p - x_1$. Sämtliche Fräserzähne haben einen von der Teilung p des herzustellenden Gewindes 24b deutlich abweichenden axialen Abstand voneinander.

Da der Fräserzahn 5b axial in Richtung auf den Fräserzahn 6b versetzt angeordnet ist, wird im Bereich der Flanke 12b mehr Material vom Werkstück abgetragen als auf der der Flanke 11b zugeordneten Zahnseite. Mit dem axial nachfolgenden Fräserzahn 6b, der axial in Richtung auf den Fräserzahn 7b versetzt angeordnet ist, wird im Bereich der Flanke 14b bis nahe an das Endprofil des Gewindes 24b Material vom Werkstück abgetragen. Die andere Flanke 13b des Fräserzahns 6b hat größeren Abstand von dem herzustellenden Endprofil des Gewindes.

Mit dem Fräserzahn 7b wird dann das Endprofil des Gewindes 24b hergestellt. Im Bereich der Flanke 16b trägt der Fräserzahn 7b nur noch wenig Material ab. An der anderen Flanke 15b wird deutlich mehr Material abgetragen. Auch bei einer solchen Ausbildung des Gewindefräsers werden hervorragende Oberflächenqualitäten auf beiden Flanken jedes Gewindeganges erreicht.

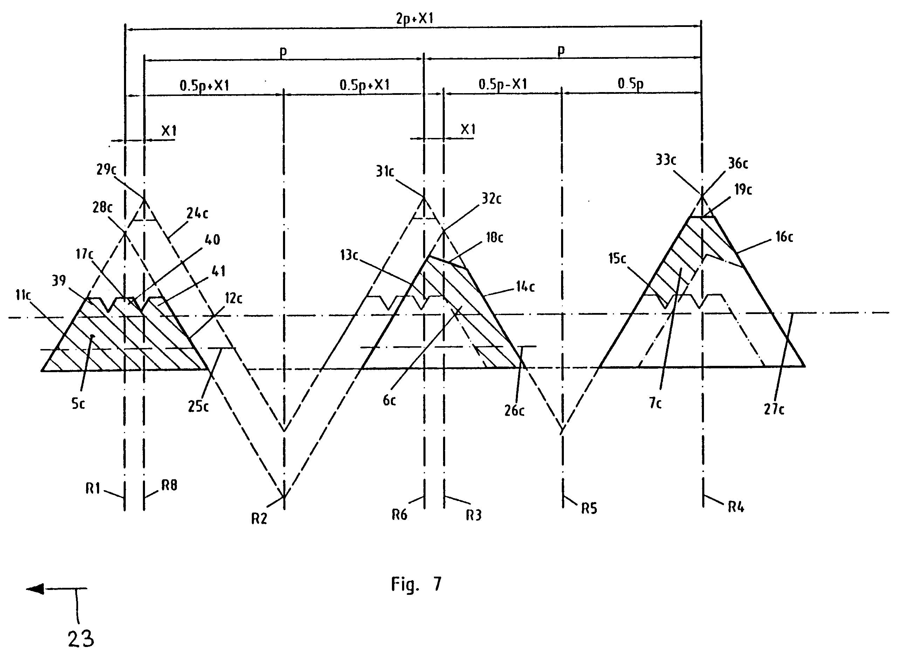

Fig. 7 zeigt einen Gewindefräser, bei dem die axialen Abstände zwischen den Zähnen 5c bis 7c sich deutlich von der Teilung p des herzustellenden Gewindes 24c unterscheiden. Der Außendurchmesser nimmt vom Fräserzahn 5c bis zum Fräserzahn 7c zu. Die Fräserzähne 5c und 6c haben gleichen Flankendurchmesser 25c und 26c. Der Fräserzahn 7c hat einen größeren Flankendurchmesser 27c.

Die gedachten Schnittpunkte 29c, 31c, 33c der Seitenflanken der verschiedenen Gewindegänge haben einen der Teilung p entsprechenden Abstand voneinander und liegen in den Radialebenen $R_8$, $R_6$ und $R_4$. Der gedachte Schnittpunkt 28c der Flanken 11c, 12c des Fräserzahnes 5c liegt in der Radialebene $R_1$ des Gewindefräsers, die den axialen Abstand $x_1$ von der Radialebene $R_8$ hat. Der gedachte Schnittpunkt 32c der Flanken 13c und 14c des Fräserzahns 6c liegt in der Radialebene $R_3$, die ebenfalls den axialen Abstand $x_1$ von der Radialebene $R_6$ hat. Die beiden Radialebenen $R_1$ und $R_3$ haben somit von der in halber Teilung liegenden Radialebene $R_2$ jeweils den Abstand $0{,}5\,p + x_1$. Der Abstand zwischen den beiden Zähnen 5c und 6c ist somit größer als die Teilung p.

Der gedachte Schnittpunkt 36c der Flanken 15c und 16c des Zahns 7c fällt mit dem gedachten Schnittpunkt 33c des entsprechenden Gewindeganges zusammen. Beide Schnittpunkte 33c, 36c liegen in der Radialebene $R_4$, die von der in halber Teilung liegenden Radialebene $R_5$ den Abstand $0{,}5\,p$ hat. Der Abstand zwischen der Radialebene $R_3$ und der Radialebene $R_5$ beträgt $0{,}5\,p - x_1$. Somit liegen die beiden Fräserzähne 6c und 7c in einem Abstand voneinander, der um das Maß $x_1$ kleiner ist als die Teilung p des zu fertigenden Gewindes 24c.

Mit der Flanke 11c des Fräserzahns 5c wird die in Fig. 7 linke Flanke des Gewindes 24c im radial äußeren Bereich fertig bearbeitet. Die gegenüberliegende Flanke 12c hat noch Abstand von der entsprechenden herzustellenden Seitenflanke des Gewindes 24c. Der nachfolgende Fräserzahn 6c stellt mit seiner Flanke 14c die in Fig. 7 rechte Flanke des herzustellenden Gewindes 24c über den größten Teil seiner Länge her. Die andere Flanke 13c des Fräserzahns 6c hat hingegen Abstand von der in Fig. 7 linken Flanke des Gewindeganges.

Mit dem Zahn 7c und dessen Flanken 15c, 16c werden dann die beiden Seitenflanken des Gewindes fertig bearbeitet.

In Fig. 7 sind die von den Zähnen 5c bis 7c zerspanten Bereiche des Werkstückes wiederum durch Schraffur gekennzeichnet.

Die Zähne 5c bis 7c haben völlig unterschiedliches Profil. Der Fräserzahn 5c hat die beiden spitzwinklig zueinander liegenden Flanken 11c, 12c, die wie bei den bisherigen Ausführungsformen im Axialschnitt gerade verlaufen. Die Stirnfläche 17c ist zahnförmig profiliert und weist drei Zähne 39 bis 41 auf, die jeweils gleich groß sind und trapezförmigen Querschnitt haben.

Die Flanke 13c des Fräserzahns 6c verläuft im Axialschnitt gerade und erstreckt sich radial weiter nach außen als die andere Flanke 14c. Beide Flanken 13c, 14c sind durch die im Querschnitt ebene Stirnfläche 18c verbunden, die von der Flanke 13c zur Flanke 14c hin abfällt und unter einem spitzen Winkel zur Drehachse des Gewindefräsers liegt. In Fig. 7 ist im Bereich des Fräserzahnes 6c noch das Profil des Fräserzahnes 5c eingezeichnet.

Der Fräserzahn 7c hat die beiden gleich langen Flanken 15c und 16c, die im Axialschnitt gerade verlaufen und durch die im Axialschnitt ebene Stirnfläche 19c miteinander verbunden sind. Im Bereich des Fräserzahnes 7c sind die Umrißformen der beiden anderen Fräserzähne 5c und 6c ebenfalls eingezeichnet.

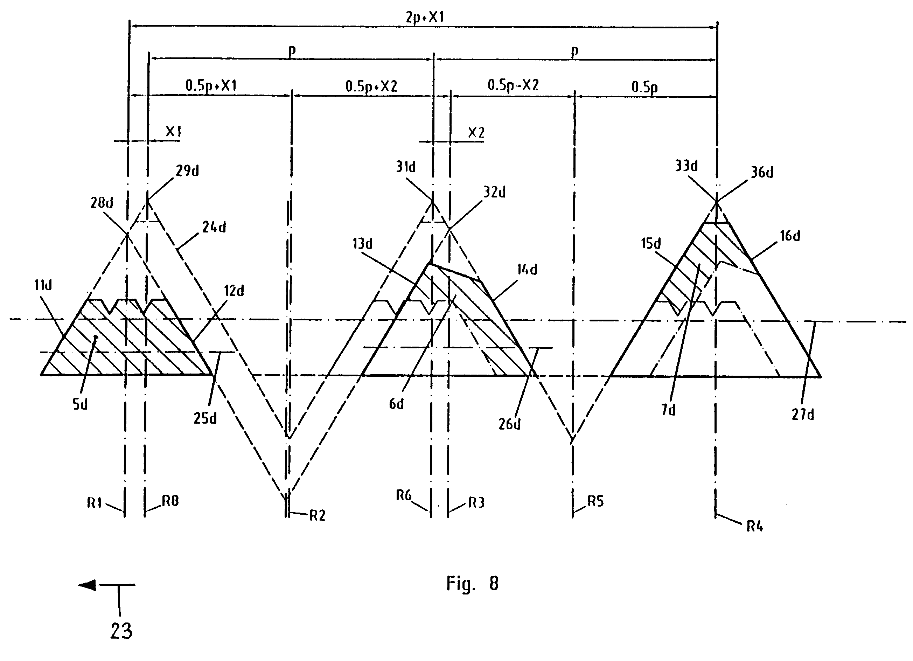

Bei der Ausführungsform gemäß Fig. 8 sind die Fräserzähne 5d bis 7d gleich ausgebildet wie bei der Ausführungsform gemäß Fig. 7. Allerdings ist der Abstand zwischen den Fräserzähnen unterschiedlich im Vergleich zur vorigen Ausführungsform. Der gedachte Schnittpunkt 28d der Flanken 11d, 12d des Fräserzahns 5d liegt in der Radialebene $R_1$, die wie beim vorigen Ausführungsbeispiel den axialen Abstand $x_1$ von der Radialebene $R_8$ hat, in welcher der gedachte Schnittpunkt 29d der Flanken des herzustellenden Gewindes 24d liegt. Der gedachte Schnittpunkt 32d der Flanken 13d, 14d des Fräserzahns 6d liegt in der Radialebene $R_3$, die von der Radialebene $R_6$, in welcher der gedachte Schnittpunkt 31d der Seitenflanken des entsprechenden Gewindeganges liegt, den axialen Abstand $x_2$ hat. Die beiden Radialebenen $R_1$ und $R_3$ haben somit von der Radialebene $R_2$, die in Höhe der halben Teilung p des herzustellenden Gewindes 24d liegt, den Abstand $0,5\,p + x_1$ sowie $0,5\,p + x_2$. Der axiale Abstand zwischen den beiden Fräserzähnen 5d und 6d ist somit größer als die Teilung p des herzustellenden Gewindes 24d.

Der gedachte Schnittpunkt 36d der Flanken 15d, 16d des Fräserzahns 7d fällt mit dem gedachten Schnittpunkt 33d des Gewindes 24d zusammen und liegt in der Radialebene $R_4$. Sie hat von der Radialebene $R_5$, die in Höhe der halben Teilung p des Gewindes 24d liegt, den axialen Abstand $0,5\,p$. Die Radialebene $R_3$ hat von der Radialebene $R_5$ den axialen Abstand $0,5\,p - x_2$. Der Abstand des Fräserzahnes 5d vom Fräserzahn 7d beträgt somit $2\,p + x_1$.

Die Flankendurchmesser 25d, 26d und 27d nehmen vom Fräserzahn 5d bis zum Fräserzahn 7d zu. Bei der vorigen Ausführungsform waren die Flankendurchmesser 25c und 26c der Fräserzähne 5c und 6c gleich. Wie bei der vorigen Ausführungsform ist der axiale Abstand zwischen den Zähnen 5d und 6d größer als die Teilung p, während der Abstand zwischen den Fräserzähnen 6d und 7d um das Maß $x_2$ kleiner als die Teilung p ist.

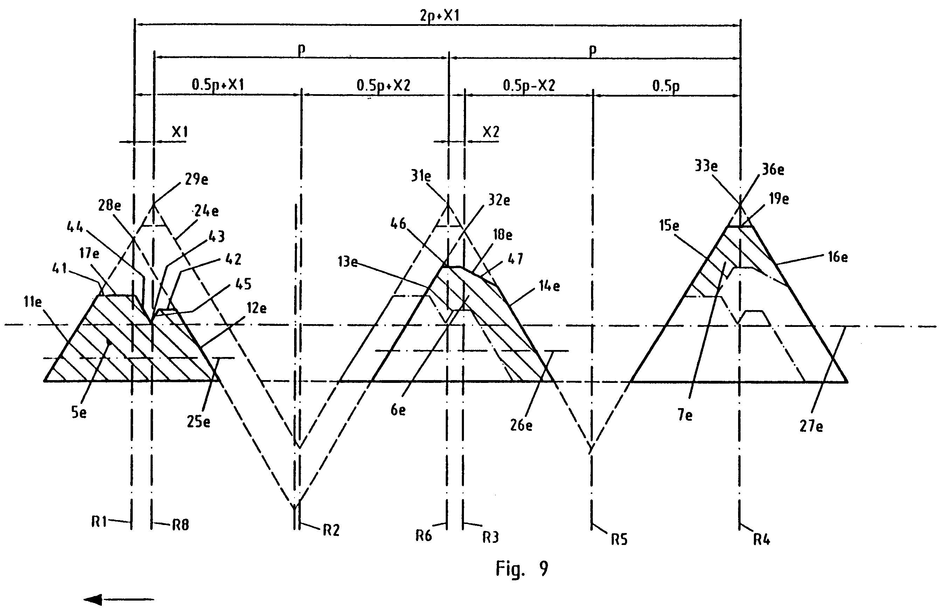

Beim Ausführungsbeispiel nach Fig. 9 hat der Fräserzahn 5e die Flanken 11e, 12e, von denen die Flanke 11e bereits den radial inneren Bereich der Seitenflanke des herzustellenden Gewindes 24e fertig bearbeitet. Die Stirnfläche 17e des Fräserzahns 5e ist gestuft ausgebildet und weist zwei im Axialschnitt ebene Abschnitte 41 und 42 auf, von denen der Flächenabschnitt 41 radial weiter außen liegt als der Flächenabschnitt 42. Die beiden im Axialschnitt parallel zur Drehachse des Gewindefräsers liegenden Flächenabschnitte 41 und 42 sind durch eine im Axialschnitt V-förmige Nut 43 voneinander getrennt, die von zwei Schrägflächen 44 und 45 begrenzt wird. Der Flächenabschnitt 41 verbindet die Flanke 11e mit der Schrägfläche 44, während der axial kürzere Flächenabschnitt 42 die Schrägfläche 45 mit der Flanke 12e verbindet.

Der Fräserzahn 6e hat die Flanken 13e und 14e, die im Axialschnitt spitzwinklig und gerade verlaufen. Sie werden durch die Stirnfläche 18e miteinander verbunden, die aus den beiden stumpfwinklig zueinander liegenden Flächenabschnitten 46 und 47 besteht. Der im Axialschnitt parallel zur Drehachse des Gewindefräsers verlaufende Flächenabschnitt 46 schließt an die Flanke 13e an, während der axial längere, im Axialschnitt ebenfalls gerade verlaufende Flächenabschnitt 47 radial schräg nach innen verläuft und stumpfwinklig an die Flanke 14e anschließt. Mit der Flanke 14e wird die in Fig. 9 rechte Seitenflanke des Gewindes 24e über mehr als die halbe Länge fertig bearbeitet. Die andere Flanke 13e liegt mit Abstand von dem durch die Flanke 11e des Fräserzahns 5e bereits fertig bearbeiteten Seitenflankenabschnitt des Gewindes 24e.

Der Fräserzahn 7e hat die beiden spitzwinklig zueinander und im Axialschnitt gerade verlaufenden Flanken 15e, 16e, die durch die Stirnfläche 19e miteinander verbunden sind. Im Unterschied zu den Zähnen 5e und 6e sind die Flanken 15e, 16e gleich lang. Die Stirnfläche 19e ist im Axialschnitt gerade und verläuft parallel zur Drehachse des Gewindefräsers. Mit den beiden Flanken 15e, 16e werden die restlichen Bereiche der beiden Seitenflanken des Gewindes 24e fertig bearbeitet.

In Fig. 9 sind die von den Fräserzähnen 5e bis 7e abzutragenden Werkstückbereiche jeweils schraffiert dargestellt. Außerdem sind im Bereich des Fräserzahnes 6e das Profil des Fräserzahnes 5e und im Bereich des Fräserzahnes 7e die Profile der Fräserzähne 5e und 6e dargestellt.

Die gedachten Schnittpunkte 29e, 31e, 33e der Gewindegänge haben jeweils den axialen Abstand p voneinander, welcher der Teilung des Gewindes 24e entspricht und die jeweils in den Radialebenen $R_8$, $R_6$ und $R_4$ liegen. Demgegenüber haben die Fräserzähne Abstände voneinander, die sich wesentlich von der Teilung p des Gewindes 24e unterscheiden. Die beiden Fräserzähne 5e und 6e sind entsprechend der vorigen Ausführungsform axial relativ zueinander so versetzt, daß ihr Abstand voneinander, wie bei den vorigen Ausführungsformen gemessen zwischen den Radialebenen $R_1$ und $R_3$, größer ist als die Teilung p. Der Abstand zwischen der Radialebene $R_8$ und der Radialebene $R_1$, in welcher der gedachte Schnittpunkt 28e der Flanken 11e, 12e des Fräserzahnes 5e liegt, beträgt $x_1$. Der Abstand zwischen der Radialebene $R_6$ und der Radialebene $R_3$, in welcher der gedachte Schnittpunkt 32e der Flanken 13e, 14e des Fräserzahnes 6e liegt, beträgt $x_2$. Somit beträgt der Abstand zwischen den beiden Radialebenen $R_1$ und $R_3$ $p + x_1 + x_2$. Andererseits beträgt der Abstand zwischen der Radialebene $R_1$ und der Radialebene $R_2$, die in Höhe der halben Teilung liegt, $0,5\,p + x_1$, während der Abstand zwischen dieser Radialebene $R_2$ und der Radialebene $R_3$ $0,5\,p + x_2$ beträgt.

Der gedachte Schnittpunkt 36e der Flanken 15e, 16e des Fräserzahns 7e fällt mit dem gedachten Schnittpunkt 33e des Gewindes 24e zusammen und liegt auf der Radialebene $R_4$. Ihr Abstand von der in Höhe der halben Teilung liegenden Radialebene $R_5$ beträgt 0,5 p. Der Abstand der Radialebene $R_3$ von der Radialebene $R_5$ hingegen beträgt $0,5\,p - x_2$. Der Abstand zwischen den Radialebenen $R_1$ und $R_4$ beträgt somit $2\,p + x_1$.

Wie bei den Ausführungsformen nach den Fig. 7 und 8 haben die Fräserzähne 5e bis 7e jeweils völlig unterschiedliches Profil. Außerdem nimmt der Flankendurchmesser 25e bis 27e vom Fräserzahn 5e zum Fräserzahn 7e zu.

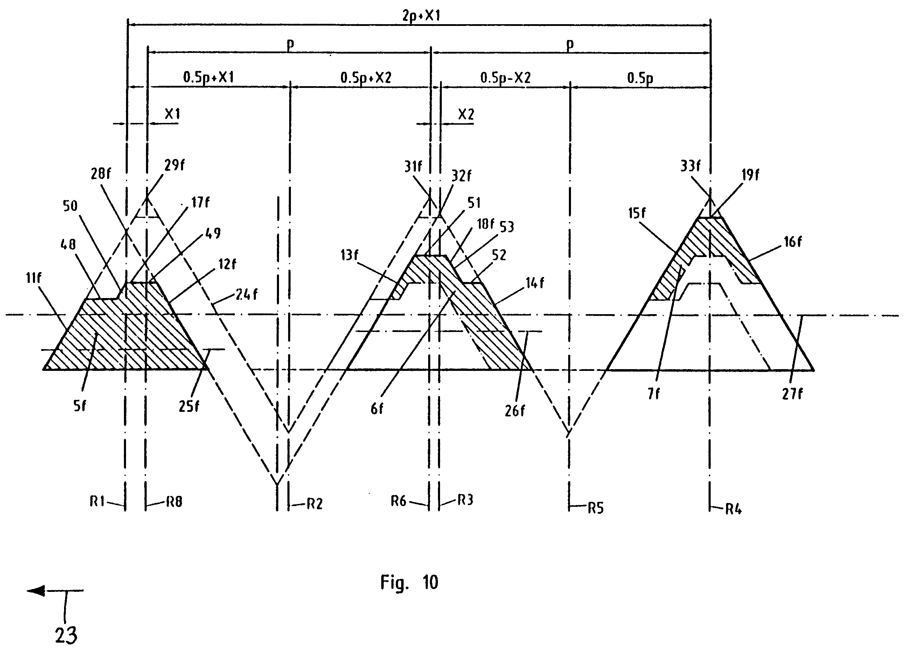

Auch beim Ausführungsbeispiel nach Fig. 10 haben die Fräserzähne 5f bis 7f jeweils unterschiedliches Profil. Der Flankendurchmesser 25f bis 27f nimmt vom Fräserzahn 5f bis zum Fräserzahn 7f zu. Auch der Außendurchmesser der Fräserzähne nimmt wie bei den vorigen Ausführungsbeispielen vom Fräserzahn 5f zum Fräserzahn 7f zu.

Die beiden Flanken 11f und 12f des Fräserzahns 5f sind unterschiedlich lang. Die Stirnfläche 17f wird durch zwei im Axialschnitt gerade und parallel zur Drehachse des Gewindefräsers liegende Flächenabschnitte 48 und 49 gebildet, die durch eine im Axialschnitt schräg verlaufende Fläche 50 ineinander übergehen. Der Flächenabschnitt 48 schließt stumpfwinklig an die kürzere Flanke 11f an, während der radial weiter außen liegende Flächenabschnitt 49 stumpfwinklig an die längere Flanke 12f anschließt. Mit der Flanke 11f wird ein Teil der in Fig. 10 linken Seitenflanke des herzustellenden Gewindes 24f bereits fertig bearbeitet.

Die Flanken 13f und 14f des Fräserzahns 6f sind ebenfalls unterschiedlich lang, wobei jedoch die dem Fräserzahn 5f zugewandte Flanke 13f länger ist als die andere Flanke 14f. Die beiden im Axialschnitt gerade verlaufenden Flanken 13f, 14f sind durch die Stirnfläche 18f miteinander verbunden, die gestuft ausgebildet ist. Sie hat die beiden Flächenabschnitte 51 und 52, die im Axialschnitt jeweils eben verlaufen und parallel zur Drehachse des Gewindefräsers liegen. Die beiden Flächenabschnitte sind durch einen im Axialschnitt schräg verlaufenden Abschnitt 53 miteinander verbunden. Der radial weiter außen liegende Flächenabschnitt 51 ist axial länger als der radial weiter innen liegende Flächenabschnitt 52 und schließt stumpfwinklig an die Flanke 13f sowie an die Schrägfläche 53 an. Der Flächenabschnitt 52 schließt stumpfwinklig an die Schrägfläche 53 und an die Flanke 14f an. Mit der Flanke 14f wird das in Fig. 10 rechte Seitenprofil des Gewindes 24f über einen Teil seiner Länge fertig bearbeitet. Die Flanke 13f liegt mit Abstand von dem bereits fertig bearbeiteten Abschnitt des linken Seitenprofils des Gewindes 24f.

Die Flanken 15f, 16f des Fräserzahns 7f sind gleich lang und durch die im Axialschnitt gerade und parallel zur Fräserachse verlaufende Stirnfläche 19f miteinander verbunden. Mit den beiden Flanken 15f, 16f werden die restlichen Abschnitte der beiden Seitenprofile des Gewindes 24f fertig bearbeitet.

Die von den Zähnen 5f bis 7f abzutragenden Werkstückbereiche sind wiederum durch Schraffur gekennzeichnet. Der Zahn 6f erzeugt im Bereich seiner Flanke 14f einen wesentlich dickeren Span als im Bereich seiner Flanke 13f. Die Spandicken im Bereich der Flanken 15f, 16f des Fräserzahnes 7f sind etwa gleich dick.

Wie bei den vorigen Ausführungsbeispielen liegen die gedachten Schnittpunkte 29f, 31f, 33f der Gewindegänge jeweils in den Radialebenen $R_8$, $R_6$ und $R_4$. Der Abstand zwischen diesen Radialebenen entspricht jeweils der Teilung p des Gewindes 24f. Der gedachte Schnittpunkt 28f der Flanken 11f, 12f des Fräserzahns 5f liegt in der Radialebene $R_1$, die von der Radialebene $R_8$ den axialen Abstand $x_1$ hat. Der gedachte Schnittpunkt 32f der Flanken 13f, 14f des Fräserzahns 6f liegt in der Radialebene $R_3$, die von der Radialebene $R_6$ den axialen Abstand $x_2$ hat, der kleiner ist als der Abstand $x_1$. Somit ist der Abstand zwischen den Fräserzähnen 5f und 6f um das Maß $x_1 + x_2$ größer als die Teilung p des Gewindes 24f. Die Radialebene $R_1$ hat von der in halber Teilung liegenden Radialebene $R_2$ den Abstand $0,5\,p + x_1$. Entsprechend hat die Radialebene $R_3$ von der Radialebene $R_2$ den axialen Abstand $0,5\,p + x_2$.

Der axiale Abstand zwischen den Fräserzähnen 6f und 7f ist um das Maß $x_2$ kleiner als die Teilung p. Der Abstand der Radialebene $R_3$ von der in Höhe der halben Teilung liegenden Radialebene $R_5$ beträgt $0,5\,p - x_2$, während der Abstand zwischen den beiden Radialebenen $R_4$ und $R_5$ $0,5\,p$ beträgt.

In Fig. 10 ist, wie auch bei den vorigen Ausführungsbeispielen, mit Schraffur der von den Fräserzähnen 5f bis 7f abzutragende Werkstückbereich gekennzeichnet. Zusätzlich sind im Bereich des Fräserzahnes 6f das Profil des Fräserzahnes 5f und im Bereich des Fräserzahnes 7f die Profile der Fräserzähne 5f und 6f eingezeichnet.

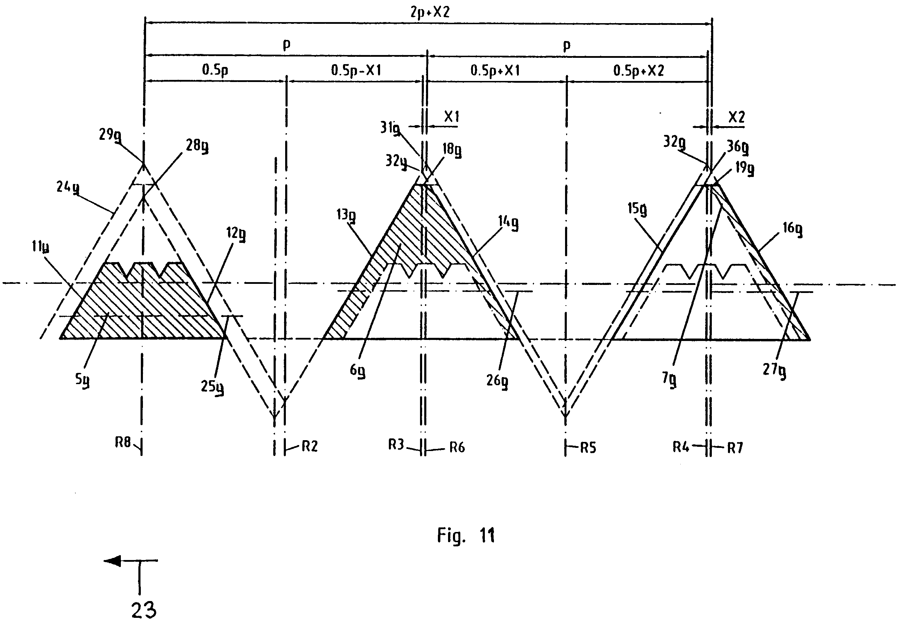

Fig. 11 zeigt eine Ausführungsform, bei der die Fräserzähne unterschiedliches Profil haben und außerdem in einem solchen axialen Abstand voneinander angeordnet sind, der ungleich der Teilung p des zu fertigenden Gewindes 24g ist. Der Fräserzahn 5g hat die Flanken 11g, 12g, die im Axialschnitt gerade sowie spitzwinklig zueinander verlaufen. Der Fräserzahn 5g ist gleich ausgebildet wie der Fräserzahn 5d gemäß Fig. 8. Die beiden Flanken 11g, 12g sind gegenüber den herzustellenden Seitenprofilen des Gewindes 24g zurückgesetzt.

Mit dem Fräserzahn 6g wird das in Fig. 11 linke Seitenprofil des Gewindes 24g fertig geschnitten. Die Flanke 13g verläuft im Axialschnitt gerade und spitzwinklig zur Flanke 14g, die über die im Axialschnitt gerade und parallel zur Drehachse des Gewindefräsers verlaufende Stirnfläche 18g mit der Stirnfläche 13g verbunden ist.

Mit der Flanke 16g des Fräserzahns 7g schließlich wird auch das rechte Seitenprofil des Gewindes 24g fertig geschnitten. Die andere Flanke 15g hat Abstand vom fertig bearbeiteten linken Seitenprofil des Gewindes 24g. Die beiden Flanken 15g, 16g, die im Axialschnitt gerade und spitzwinklig zueinander verlaufen, sind durch die im Axialschnitt gerade und parallel zur Drehachse des Gewindefräsers verlaufende Stirnfläche 19g miteinander verbunden. Mit dem Fräserzahn 7g wird nur noch im Bereich der Flanke 16g, wie der schraffierte Bereich zeigt, ein dünner Span abgenommen.

Die gedachten Schnittpunkte 29g, 31g, 33g der Gewindegänge liegen in den Radialebenen $R_8$, $R_6$, $R_4$, die jeweils den axialen Abstand p voneinander haben, welcher der Teilung des Gewindes 24g entspricht. Der gedachte Schnittpunkt 28g der Flanken 11g, 12g des Fräserzahns 5g liegt ebenfalls in der Radialebene $R_8$. Der gedachte Schnittpunkt 32g der Flanken 13g, 14g des Fräserzahns 6g liegt in der Radialebene $R_3$, die von der Radialebene $R_6$ den Abstand $x_1$ hat. Der gedachte Schnittpunkt 36g der Flanken 15g, 16g des Fräserzahns 7g liegt in der Radialebene $R_7$, die von der Radialebene $R_4$ den Abstand $x_2$ hat.

Der Abstand zwischen den beiden Schnittpunkten 28g und 32g der Fräserzähne 5g, 6g ist um das Maß $x_1$ kleiner als die Teilung p. Dementsprechend ist der Abstand zwischen den Schnittpunkten 32g und 36g der Fräserzähne 6g und 7g größer als die Teilung p, und zwar um das Maß $x_1 + x_2$.

Die Radialebene $R_8$ hat von der in halber Höhe der Teilung p liegenden Radialebene $R_2$ den Abstand 0,5 p. Der axiale Abstand zwischen den beiden Radialebenen $R_2$ und $R_3$ beträgt 0,5 p - $x_1$. Die Radialebene $R_3$ hat von der in halber Höhe der Teilung p liegenden Radialebene $R_5$ den Abstand 0,5 p + $x_1$. Der Abstand zwischen den beiden Radialebenen $R_5$ und $R_4$ beträgt 0,5 p + $x_2$. Somit entspricht der axiale Abstand zwischen den Schnittpunkten 28g und 36g der Fräserzähne 5g und 7g dem Maß 2 p + $x_2$.

Der Flankendurchmesser 25g des Fräserzahns 5g ist kleiner als der Flankendurchmesser 26g des Fräserzahns 6g. Der Flankendurchmesser 27g des Fräserzahns 7g schließlich ist gleich dem Flankendurchmesser 26g.

## Patentansprüche

1. Gewindefräser zum Zirkularfräsen einer Gewindebohrung ohne Vorbohren eines Kernloches, mit einem Schaft und einem Arbeitsteil, der zumindest eine Stirnschneide und Fräserzähne aufweist, mit denen die Gewindegänge herstellbar sind und die in rechtwinklig zur Fräserachse liegenden Umfangsebenen angeordnet sind, die in Achsrichtung des Gewindefräsers Abstand voneinander haben,
   dadurch gekennzeichnet, daß der Abstand zumindest zweier der Umfangsebenen der Fräserzähne (5 bis 8; 5a bis 5g, 6a bis 6g, 7a bis 7g, 8a bis 8g) voneinander ungleich der Teilung (p) des herzustellenden Gewindes (24, 24a bis 24g) ist.

2. Gewindefräser nach Anspruch 1,
   dadurch gekennzeichnet, daß der Abstand der Umfangsebenen größer als die Teilung (p) des Gewindes (24, 24a bis 24g) ist.

3. Gewindefräser nach Anspruch 1,
   dadurch gekennzeichnet, daß der Abstand der Umfangsebenen kleiner als die Teilung (p) des Gewindes (24, 24a bis 24g) ist.

4. Gewindefräser nach einem der Ansprüche 1 bis 3,
   dadurch gekennzeichnet, daß der Abstand der Umfangsebenen kleiner und größer als die Teilung (p) des Gewindes (24, 24a bis 24g) ist.

5. Gewindefräser nach einem der Ansprüche 1 bis 4,
   dadurch gekennzeichnet, daß die Fräserzähne (5, 5a bis 5g, 6, 6a bis 6g, 7, 7a bis 7g, 8, 8a bis 8g) innerhalb der Umfangsebene gleichen Querschnitt haben.

6. Gewindefräser nach einem der Ansprüche 1 bis 5,
   dadurch gekennzeichnet, daß die Fräserzähne (5, 5a bis 5g; 6, 6a bis 6g; 7, 7a bis 7g; 8, 8a bis 8g) unterschiedlicher Umfangsebenen unterschiedliche Querschnittsform haben.

7. Gewindefräser nach einem der Ansprüche 1 bis 6,
   dadurch gekennzeichnet, daß die Fräserzähne (5, 5a bis 5g; 6, 6a bis 6g; 7, 7a bis 7g; 8, 8a bis 8g) mit zunehmendem Abstand von der Stirnseite (3) des Arbeitsteiles (2) größeren Flanken- und/oder Außendurchmesser haben.

8. Gewindefräser nach einem der Ansprüche 1 bis 7,
   dadurch gekennzeichnet, daß die Fräserzähne (5, 5a bis 5g; 6, 6a bis 6g; 7, 7a bis 7g; 8, 8a bis 8g) zumindest einer Umfangsebene mit ihren Flanken (11, 11a bis 11g; 12, 12a bis 12g; 13, 13a bis 13g;

14, 14a bis 14g; 15, 15a bis 15g; 16, 16a bis 16g) Abstand von den Seitenflanken der fertigen Gewindegänge haben.

Fig. 1

Fig. 2

Fig. 3

Fig. 4

Fig. 5

Fig. 6

EP 0 733 430 A1

Fig. 7

EP 0 733 430 A1

Fig. 8

EP 0 733 430 A1

Fig. 9

EP 0 733 430 A1

Fig. 10

EP 0 733 430 A1

Fig. 11

| | Europäisches Patentamt | **EUROPÄISCHER RECHERCHENBERICHT** | Nummer der Anmeldung EP 96 10 3744 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | CH-A-118 046 (BAUMANN) <br> * Seite 2, rechte Spalte, letzter Absatz - Seite 3, linke Spalte, Zeile 3; Abbildungen 14-16 * <br> --- | 1,2,8 | B23G5/18 |
| X | US-A-1 542 893 (KREUTZBERGER) <br> * Seite 2, Zeile 25 - Zeile 123; Abbildung 3 * <br> --- | 1,3,5,8 | |
| X | DE-C-543 628 (MANNESMANNRÖHREN-WERKE) <br> * Seite 2, Zeile 118 - Seite 3, Zeile 10; Abbildungen 1,2 * <br> ----- | 1,4,6-8 | |
| | | | **RECHERCHIERTE SACHGEBIETE (Int.Cl.6)** |
| | | | B23G |

Der vorliegende Recherchenbericht wurde für alle Patentansprüche erstellt

| Recherchenort | Abschlußdatum der Recherche | Prüfer |
|---|---|---|
| DEN HAAG | 20.Juni 1996 | Bogaert, F |